# EUROPÄISCHE PATENTSCHRIFT

(11) **EP 0 458 328 B1**
(45) Veröffentlichungstag und Bekanntmachung des Hinweises auf die Patenterteilung: **24.04.1996**
(21) Anmeldenummer: 91108345.9
(22) Anmeldetag: 23.05.1991
(51) Int. Cl.: C04B 28/02

(54) **Verdickersystem für wasserhaltige Baustoffgemische**
Thickening system for watercontaining building material mixtures
Système épaississant pour mélanges aqueux de matériaux de construction

(30) Priorität: 25.05.1990 DE 4016979
(43) Veröffentlichungstag der Anmeldung: 27.11.1991
(73) Patentinhaber: HOECHST AKTIENGESELLSCHAFT, D-65926 Frankfurt am Main (DE)
(72) Erfinder: Debus, Gerhard, W-6220 Assmannshausen (DE); Mann, Heinz-Josef, W-6501 Saulheim (DE); Lüdke, Martin, W-6227 Oestrich-Winkel (DE)

(56) Entgegenhaltungen:
- EP-A- 0 026 905
- DE-A- 1 917 733
- DE-A- 2 735 216
- US-A- 3 294 087
- CHEMICAL ABSTRACTS, Band 110, Nr. 13, 26. Juni 1989, Columbus, OH (US); Seite 290, Nr. 236235w
- CHEMICAL ABSTRACTS, Band 94, Nr. 26, 29. Juni 1981, Columbus, OH (US); Seite 292, Nr. 213239n

## Beschreibung

Modernen Baustoffen, wie Putze, Kleber, Spachtelmassen usw. werden zur Verbesserung der Verarbeitbarkeit Celluloseether zugesetzt. Celluloseether verleihen den entsprechenden Produkten ein hohes Wasserrückhaltevermögen, erhöhen die Standfestigkeit und verbessern die Haftung. Um die Standfestigkeit noch zu verbessern, werden Celluloseether häufig mit synthetischen oder natürlichen organischen Polymeren modifiziert. Seit mehr als zwanzig Jahren sind in Veröffentlichungen und Patentanmeldungen Baustoffgemische beschrieben, die neben Celluloseethern noch Polyacrylamide (PAA) bzw. PAA-modifizierte Celluloseether enthalten (z.B. DE-AS 1 283 726; DE-AS 1 646 501; DE-OS 2 146 709; US-PS 4 021 257). Neben der Zugabe von PAA wird als weitere Modifizierungsvariante in DE-OS 33 39 860 die chemische Verknüpfung von Celluloseethern mit Polyacrylamiden beschrieben. Die Vorteile, die mit der Modifizierung verbunden sind, wirken sich aber häufig ungünstig auf die Hafteigenschaften der Baustoffgemische aus.

In DE-A 19 17 733 sind Baustoffgemische beschrieben, die zur Wasserretention ein System aus Celluloseether, Polyvinylakoholen, einer Verbindung aus der Gruppe Borsäure, Borax und Alkalichromate, Polyvinylacetat und Acetamid oder Chloracetamid enthalten.

Gegenstand der vorliegenden Erfindung sind Verdickersysteme für wasserhaltige Baustoffgemische, die aus 0,01 bis 2, vorzugsweise 0,1 bis 1,0 Gew.-Teile eines wasserlöslichen Celluloseethers, 0,01 bis 2, vorzugsweise 0,1 bis 1,5 Gew.-Teile Polyvinylalkohol und 0,005 bis 1, vorzugsweise 0,05 bis 0,5 Gew.-Teile Borax bestehen, wobei die jeweiligen Gewichtsteile den Prozentabgaben bezogen auf den Gehalt an Trockensubstanz in dem Baustoffgemisch entsprechen.

Die beschriebenen Verdickungssysteme eignen sich für alle wasserhaltigen Baustoffgemische, insbesondere für Zementfliesenkleber, Spachtelmassen, Putze oder Anstrichmittel. Als Zementfliesenkleber kommen die üblichen Produkte dieser Art in Frage, die beispielsweise neben Sand bis zu etwa 50 Gew.-% Zement und bis zu etwa 10 Gew.-% übliche Additive enthalten. Anstrichmittel sind beispielsweise Leimfarben, Zementfarben, Dispersionsfarben, Silikonharzfarben usw.

Als wasserlösliche Celluloseether für die erfindungsgemäßen Verdickersysteme kommen vor allem in Frage Methylcellulose, Methylhydroxyethylcellulose, Methylhydroxypropylcellulose, Hydroxyethylcellulose sowie deren hydrophob substituierten Derivate, Hydroxyethylhydroxypropylcellulose sowie deren hydrophob substituierten Derivate, Carboxymethylcellulose oder Carboxymethylhydroxyethylcellulose. Bevorzugt sind Hydroxyethyl- und Methylhydroxyalkylcelluloseether. Diese Celluloseether können wie es üblich ist, geringe Mengen an Modifizierungsmitteln enthalten.

Außer diesen wasserlöslichen Celluloseethern enthalten die erfindungsgemäßen Verdickungssysteme noch Polyvinylalkohol (PVA) in der angegebenen Menge. Hierfür kommen voll- oder teilverseifte oder innerlich weichgemachte Polyvinylalkohole mit einem mittleren Polymerisationsgrad von 150 bis 10000, vorzugsweise 300 bis 5000 in Frage. Auch Produkte die als Komponente Polyvinylalkohol enthalten, z.B. Kunststoffdispersionen und Kunststoffpulver sind geeignet. Als dritte Komponente enthalten die erfindungsgemäßen Verdickungssysteme noch Borax.

Die zusätzliche Erhöhung der Verdickungswirkung des im Verdickersystem enthaltenen Celluloseethers beruht möglicherweise auf einer Komplexbildung zwischen PVA und Borax, die zu einem Diolkomplex führt. Hierbei werden zwei Polyvinylalkoholketten über ein Boration miteinander verknüpft. Die stärkere Verdickung der Celluloseether führt in den Baustoffgemischen zu höheren Konsistenzen, die in der Regel bessere Standfestigkeiten bewirken. Dies soll in den folgenden Beispielen gezeigt werden.

Besonders hohe Anforderungen bezüglich Standfestigkeit werden an Dünnbettklebemörtel (zementhaltige Fliesenkleber) gestellt. Ein weiteres wichtiges Anforderungskriterium für Dünnbettklebemörtel ist die Haftzugfestigkeit. Bei dieser Anwendung zeigt das erfindungsgemäße Verdickersystem gegenüber Mischungen aus Celluloseethern und anderen Polymerisaten eine wesentlich verbesserte Haftzugfeztigkeit.

### Beispiele

### 1. Fliesenkleber

Zusammensetzung der Grundmischung (100 Gewichtsteile)

| | |
|---|---|
| Portlandzement PZ 45 F | 40 Gewichtsteile |
| Quarzsand 0,01 mm - 0,5 mm | 58 Gewichtsteile |
| Kunststoffdispersionspulver (Copolymer aus Vinylacetat mit Vinylversatat) | 2 Gewichtsteile |

Die Zusammensetzung des Fliesenklebers ist der nachfolgenden Tabelle zu entnehmen. Beispiel 1 ist ein Vergleichsbeispiel.

| Beispiele | 1 | 2 | 3 |
|---|---|---|---|
| | Gewichtsteile | | |
| Grundmischung | 98 | 98 | 98 |
| Borax | - | 0,2 | 0,3 |
| Methylhydroxyethylcellulose (nicht modifiziert) | 0,5 | 0,5 | 0,5 |

| | µmol/kg | | |
|---|---|---|---|
| Polyvinylalkohol | - | 77 | 35 |
| Wasserfaktor | 0,24 | 0,25 | 0,26 |

Die Menge PVA bezieht sich auf 1 kg Trockensubstanz. Der Wasserfaktor orientiert sich an dem augenscheinlichen Wasserbedarf; d.h. es wurde die Wassermenge eingesetzt, die eine verarbeitungsgerechte Konsistenz ergab.

### Bewertungskriterien

a) Abrutschverhalten: Mit einem 6 x 6 mm Zahnspachtel wurde der Kleber auf eine Beton-Gehwegplatte aufgetragen, am oberen Rand der Platte sofort eine ca. 600 g schwere Steinzeugfliese (Kantenlänge: 15 cm) aufgelegt und diese 30 Sekunden mit einem 5 kg-Gewicht belastet. Danach wird die Platte senkrecht gestellt und die Fliese über einen Zeitraum von 10 Minuten auf Abrutschen beobachtet. Ein evtl. Rutschen wird von einer Markierung aus, die während der Belastung mit einem Spachtel am oberen Rand der Fliese angebracht wurde, in mm gemessen.
b) Haftzugfestigkeit nach DIN 18156, Teil 2, Ausgabe 1978, 28 Tage Normallagerung mit Steingut- und Steinzeugfliesen.

### Ergebnisse:

| Beispiel | 1 | 2 | 3 |
|---|---|---|---|
| Abrutschen [mm] | abgerutscht | 0 - 1 | 0 - 1 |

| Haftzugfestigkeit [N/mm²] | | | |
|---|---|---|---|
| Steingut | 1,3 | 1,0 | 1,1 |
| Steinzeug | 1,0 | 1,2 | 1,3 |

Beispiel 1 mit nichtmodifizierter Methylhydroxyethylcellulose ergibt erwartungsgemäß gute Haftzugfestigkeiten, ist aber aufgrund des schlechten Abrutschverhaltens keine für die Praxis brauchbare Formulierung. Die Beispiele 2 und 3, die die erfindungsgemäßen Verdickerkomponenten enthalten, erfüllen den Abrutschtest und zeigen gute Haftzugfestigkeiten.

### 2. Spachtelmassen auf Gipsbasis

Die Zusammensetzung der Spachtelmasse ist der nachfolgenden Tabelle entnehmbar. Beispiel 4 ist ein Vergleichsbeispiel.

| Beispiele | 4 | 5 | 6 | 7 |
|---|---|---|---|---|
| | Gewichtsteile | | | |
| Modellgips (β-Halbhydrat) | 99 | 98,1 | 97,7 | 96,8 |
| Methylcellulose (nicht modifiziert) | 1,0 | 1,0 | 1,0 | 1,0 |
| Borax | - | 0,3 | 0,5 | 0,7 |
| Polyvinylalkohol | - | 0,6 | 0,8 | 1,5 |
| Wasserfaktor | 0,55 | 0,55 | 0,55 | 0,55 |

| **Ergebnisse** | | | | |
|---|---|---|---|---|
| Beispiel | 4 | 5 | 6 | 7 |
| Verdickung | 0 | +1 | +2 | +3 |
| Durch Zugabe des erfindungsgemäßen Verdickersystems (Beispiele 5, 6, und 7) wird eine Konsistenzerhöhung (stärkere Verdickung) erreicht, bei gleichem Wasserfaktor von 0,55. Die Bewertung der Verdickungswirkung erfolgte aufgrund folgender Werteskala: 0 = Ausgangsverdickung; +1 = etwas stärkere Verdickung; +2 = wesentlich stärkere Verdickung; +3 sehr starke Verdickung. | | | | |

## Patentansprüche

1. Verdickersystem für wasserhaltige Baustoffgemische, welches aus 0,01 bis 2 Gew.-Teile eines wasserlöslichen Celluloseethers, 0,01 bis 2 Gew.-Teile Polyvinylalkohol und 0,005 bis 1 Gew. Borax besteht.

2. Verdickersystem nach Anspruch 1, dadurch gekennzeichnet, daß es zu 0,1 bis 1,0 Gew.-Teilen aus einem wasserlöslichen Celluloseether, zu 0,1 bis 1,5 Gew.-Teilen aus Polyvinylalkohol und zu 0,05 bis 0,5 Gew.-Teilen aus Borax besteht.

3. Verdickersystem nach Anspruch 1 oder 2, dadurch gekennzeichnet, daß es Hydroxyethyl- oder Methylhydroxalkylcelluloseether als wasserlösliche Celluloseether enthält.

4. Verwendung des Verdickersystems nach einem der Ansprüche 1 bis 3 in Baustoffgemischen, insbesondere für Zementfliesenkleber, Spachtelmassen, Putze und Anstrichmittel.

## Claims

1. A thickening system for water-based building material mixes, composed of 0.01 to 2 parts by weight of a water-soluble cellulose ether, 0.01 to 2 parts by weight of polyvinyl alcohol and 0.005 to 1 part by weight of borax.

2. A thickening system as claimed in claim 1 composed of 0.1 to 1.0 part by weight of a water-soluble cellulose ether, 0.1 to 1.5 parts by weight of polyvinyl alcohol and 0.05 to 0.5 part by weight of borax.

3. A thickening system as claimed in claim 1 or 2 containing hydroxyethyl cellulose ether or methyl hydroxyalkyl cellulose ethers as water-soluble cellulose ethers.

4. Use of the thickening systems as claimed in any of claims 1 to 3 in building material mixes, especially for tile cements, knifing fillers, plasters and coating materials.

## Revendications

1. Système épaississant pour des mélanges aqueux de matériaux de construction, qui est constitué de 0,01 à 2 parties en masse d'un éther de cellulose soluble dans l'eau, de 0,01 à 2 parties en masse d'un poly(alcool vinylique) et de 0,005 à 1 partie en masse de borax.

2. Système épaississant selon la revendication 1, caractérisé en ce qu'il est constitué de 0,1 à 1,0 partie en masse d'un éther de cellulose soluble dans l'eau, de 0,1 à 1,5 partie en masse d'un poly(alcool vinylique) et de 0,05 à 0,5 partie en masse de borax.

3. Système épaississant selon la revendication 1 ou 2, caractérisé en ce qu'il contient un éther hydroxyéthylcellulosique ou un éther méthylhydroxyalkylcellulosique comme éther de cellulose soluble dans l'eau.

4. Utilisation du système épaississant selon l'une des revendications 1 à 3 dans des mélanges de matériaux de construction, en particulier pour des colles pour carrelages au ciment, des mastics, des enduits et des peintures.
